# EUROPEAN PATENT SPECIFICATION

(11) **EP 2 371 886 B1**
(45) Date of publication and mention of the grant of the patent: **30.03.2016**
(21) Application number: 09832940.2
(22) Date of filing: 17.12.2009
(51) Int. Cl.: C08J 11/10, C08L 21/00

(54) **AUTOMATIC RUBBER POWDER PLASTICIZING METHOD AND EQUIPMENT FOR AUTOMATIC RUBBER POWDER PLASTICIZING METHOD**
AUTOMATISCHES VERFAHREN ZUR PLASTIFIZIERUNG VON KAUTSCHUKPULVER SOWIE VORRICHTUNG FÜR DAS AUTOMATISCHE VERFAHREN ZUR PLASTIFIZIERUNG VON KAUTSCHUKPULVER
PROCÉDÉ AUTOMATIQUE DE PLASTIFICATION DE POUDRE DE CAOUTCHOUC ET ÉQUIPEMENT ASSOCIÉ

(30) Priority: 18.12.2008 CN 200810238546
(43) Date of publication of application: 05.10.2011
(73) Proprietor: Taian Jinshan Rubber Industry Co., Ltd., Shandong 271502 (CN)
(72) Inventor: ZHAO, Rongbin, Dongping Shandong 271502 (CN); LI, Guangfeng, Dongping Shandong 271502 (CN); JI, Kuijiang, Dongping Shandong 271502 (CN)
(74) Representative: Goddar, Heinz J.
(86) International application number: PCT/CN2009/075659
(87) International publication number: WO 2010/069258

(56) References cited:
- CN-A- 1 133 314
- CN-A- 1 657 557
- CN-A- 1 754 904
- CN-A- 101 173 059
- CN-A- 101 434 710
- CN-Y- 201 250 197
- US-A- 5 578 700
- US-A1- 2005 203 197
- DATABASE WPI Week 200915 Thomson Scientific, London, GB; AN 2009-B36823 XP002682983, & CN 101 280 078 A (GUANGZHOU REGENERATED RESOURCE USE INST) 8 October 2008 (2008-10-08)
- DATABASE WPI Week 200873 Thomson Scientific, London, GB; AN 2008-M34067 XP002682984, & CN 101 113 261 A (ZHONGHONG TIANJIN IND CO LTD) 30 January 2008 (2008-01-30)

## Description

### BACKGROUND OF THE INVENTION

### 1. Technical Field

The invention relates to an automatic rubber powder plasticizing method which carries out plasticization to the rubber powder in the recovery, processing and utilization of waste rubber. The invention also provides a plasticization apparatus for the plasticizing process.

### 2. Description of Related Art

Rubber as an important strategic material is strictly controlled by various countries. In spite of high consumption of rubber, China has very scarce resources of rubber and produces a great deal of waste rubber. To solve the shortage of rubber resources, China has been advocating, encouraging and supporting the reuse of waste rubber and reclaimed rubber production. Rubber powder, as an intermediate product of the waste rubber upon recycling, is an important resource for the production of reclaimed rubber. So its quality determines the quality of reclaimed rubber.
Currently, rubber powder is desulfurized by dynamic vulcanization method mainly. This method has the following shortcomings:
1. High pressure. Working pressure during desulfurization is high up to 2.2 ∼ 4.0MPa;
   dynamic desulfurization tank requires the use of class n pressure vessel; long-term use or improper use may cause thinning of the tank wall and other potential safety hazard, and even lead to accidents of equipment and person.
2. Introduction of water and exhaust emission. Under high temperature conditions, in order to prevent rubber powder from being carbonized due to uneven heating, it is required to add some water during desulfurization to form steam or feed steam directly as the heat transfer medium. However, the steam and the added softeners may have complex reactions, thus to produce odorous exhaust, and further result in serious environmental pollution. Although the treatment is carried out, it is impossible to fundamentally solve the pollution problems.
3. Intermittent production mode and manual feeding. These have non-continuous production mode, low productivity, high labor intensity, and the demand of a lot of work and effort.
4. High energy consumption. In intermittent production mode, high pressure and stream are discharged as waste, and the production cost is high.
5. Unstable quality and low controllability. Intermittent production leads to large quality difference in batches and low controllability. And the complex reaction takes place in the production conditions of high pressure, high temperature and high humidity. The quality of each batch is known only after pressure and steam relief, so it is hard to control the quality of each batch.
6. The rubber powder that is treated can be used for the production of reclaimed rubber products only after dehydration. However, dehydration is a complex process and requires a whole set of equipment, thus leading to large investment, high energy consumption and high cost.
A regeneration process directed at the regeneration of butyl rubber is disclosed in CN-A-1 754 904.

### BRIEF SUMMARY OF THE INVENTION

An object of the present invention is to provide an automatic rubber powder plasticizing process. This object is solved by the process according to claim 1. The process can realize automatic continuous production without pressure, waste gas discharge or pollution, so it is safe and reliable in use, stable in quality and easy to control. The plasticized rubber powder processed can be directly used for the production of rubber products without dehydration, thereby saving energy, reducing consumption and investment as well as lowering cost. The invention also provides a plasticization apparatus for plasticizing capable of realizing automatic continuous production and featuring a simple structure, with easy and convenient operation, easy control as well as low cost.

The process involves smashing the waste rubber to powder in 10 meshes to 40 meshes, adding some activator and softener according to a certain weight ratio, evenly mixing them, and then heating the mixture to 180∼320°C and hold for 8∼15 min, afterwards, carrying out desulfurization and plasticizing, then the plasticized rubber powder is obtained after cooling the resultant mixture. (To distinguish it from the rubber powder which is obtained by dynamic vulcanization, we call it plasticized rubber powder).

The detailed process is as follows:
Step 1, ingredients mixing: smash the waste rubber to powder in 10 meshes to 40 meshes, add some activator and softener according to the weight ratio of: rubber powder: activator :
   softener = 1: 0.3∼0.4%:8∼18%, then evenly mix them;
Step 2, desulfurization and plasticizing: heat the mixture obtained according to Step 1 to 180∼320°C and hold for 8∼15 min; then carry out desulfurization and plasticizing to get the plasticized rubber powder of the invention;
Step 3, cooling: cool the plasticized rubber powder after plasticizing to 80°C and below, then the resultant product can be directly used or packaged for use.

The activator can be selected from common 450B, 510, 420 and other activators.

The softener can be commonly used for pix carbonis, pine tar and so on.

Rubber powder belongs to vulcanized rubber, and has elasticity and other properties due to its spatial crosslinked net structure. For the regeneration and utilization of the waste rubber, it is required to destroy the spatial crosslinked net structure of the original rubber firstly. The method is as below: 1. mechanical effect, i.e. by means of mechanical smashing (the process of manufacturing rubber powder); 2. thermal oxidation, that is, the crosslinked net structure is destroyed by scission reaction under thermal oxidation of rubber; 3. add regenerating agents, i.e. activator and softener, to make vulcanized rubber swelling and soft, with better plasticity, and accelerate the degradation of the vulcanize rubber. For the crosslinked structure of the vulcanize rubber, sulfur is often used as cross-linking agent for common rubber to form cross-linked bone structure (the cross-linked bone includes single sulfur bond, disulfide bond and multiple disulfide bonds, etc.). The common vulcanization system is primarily based on multiple disulfide bonds. Therefore, the damage of vulcanized rubber structure is in fact a rupture of the cross-linked bond. As the multiple disulfide bonds are smaller than the rubber main chain bond (c-c bond), the multiple disulfide bonds will break more easily, this is what we called "desulfurization reasons". However, in fact, sulfur molecules have formed small sulfur rubber molecules rather than being separated. Moreover, the crosslinking density of vulcanized rubber is small, there is free thermal motion in rubber molecule chains between two cross-linking points and non-cross-linking unsaturated double chains exist, so the desulfurization rubber powder and recycled rubber powder have plasticity and re-cross-linking functions.

The process is performed by an automatic plasticization apparatus which comprises a stirring unit, a feeding unit, a thermal reaction unit and a cooling unit. The thermal reaction unit is provided with a heating piece, and the cooling unit is equipped with a cooling circulation piece. The outlet of the stirring unit is communicated with the inlet of the feeding unit. The outlet of the feeding unit is communicated with the inlet of the thermal reaction unit, and the outlet of the thermal reaction unit is communicated with the inlet of the cooling unit.

The feeding unit can adopt many structural forms, such as spiral conveyance unit I or other conveyance units.

The thermal reaction unit can adopt many structural forms, such as spiral conveyance unit II, and a heating piece is configured outside the spiral conveyance unit II. The heating unit can adopt many structural forms, such as electrical heating unit or heat-transfer oil heating circulation unit and so on.

The cooling unit can adopt many structural forms, such as spiral conveyance unit III, and a cooling circulation piece is provided outside it. The cooling circulation piece is air cooled or water cooled, etc.

The stirring unit, the feeding unit, the thermal reaction unit and the cooling unit are electrically coupled to the electric control unit so as to realize automatic control and continuous production.

The rubber power to be plasticized is put into the stirring unit with the introduction of an activator and softener for mixing. After evenly mixed, the mixture is fed into the feeding unit for further mixing, and then delivered to the thermal reaction unit for desulfurization and plasticizing, after that it is supplied to the cooling unit for cooling, and finally sent out through the outlet of the cooling unit after cooling of the rubber power plasticized for directly packaging or delivering to the recycled rubber products factory for manufacturing. By means of the principle of rubber desulfurization, the invention improves the existing dynamic vulcanization process and carries out the desulfurization and plasticizing of the rubber powder without pressure or water, thus greatly saving energy and creating no waste gas emission. The process is also simple, labor & effort-saving, low in cost, stable in quality and easy to control. With continuous production, the process also features high efficiency. The plasticized rubber powder can be directly used for production of rubber products without dehydration, thereby saving a lot of energy, labor, materials and financial resources and simplifying the procedure, thus acquiring remarkable social benefits.

### BRIEF DESCRIPTION OF THE SEVERAL VIEWS OF THE DRAWINGS

The drawings show the schematic view of the apparatus according to the invention.

### DETAILED DESCRIPTION OF THE INVENTION

The invention provides an automatic rubber powder plasticizing process for sulfidizing the rubber powder, and a plasticization apparatus for the plasticizing process.

Smash waste rubber to powder in 10 meshes to 40 meshes, add activator and softer according to certain weight ratio, evenly mix them, and then heat the mixture to 180∼320°C and hold for 8∼15 min, afterwards, carry out desulfurization and finally cool the resultant mixture to get the plasticized rubber powder.

The detailed process is as follows:
Step 1, ingredients mixing: smash the waste rubber to powder in 10 meshes to 40 meshes, add some activator and softener according to the weight ratio of: rubber powder: activator :
   softener = 1: 0.3∼0.4%:8∼18%, then evenly mix them;
Step 2, desulfurization and plasticizing: heat the mixture obtained according to Step 1 to 180∼320°C and hold for 8∼15 min; then carry out desulfurization and plasticizing to get the plasticized rubber powder of the invention;
Step 3, cooling: cool the plasticized rubber powder after plasticizing to 80°C and below, then the resultant product can be directly used or packaged for use.

The activator can be selected from common 450B, 510, 420 and other activators.

The softener can be commonly used pix carbonis, pine tar and so on.

### Embodiment 1:

Add activator and softener in waste rubber powder in 10∼20 meshes, wherein the activator can be selected from common 450B, 510, 420 and other activators, the softener can be commonly used pix carbonis, pine tar and so on, at a weight ratio of: rubber powder : activator : softener = 1: 0.3∼0.4%:8∼10%, and then evenly mix them in the stirring unit 1; feed the mixture to the thermal reaction unit 3 via the feeding unit 2, and heat it to 280∼300°C and hold for 13∼15min under the stirring of the spiral conveyance unit II so that the rubber powder is heated evenly and fully desulfurized and plasticized at high temperature, afterwards, deliver the resultant mixture to the cooling unit 4 for cooling to 80°C and below, and then send out from the cooling unit 4 for the production of reclaimed rubber products.

### Embodiment 2:

Add activator and softener in waste rubber powder in 30∼40 meshes, wherein the activator and the softener are the same as those in Embodiment 1, at a weight ratio of: rubber powder : activator : softener = 1: 0.3∼0.4%:16∼18%, and then evenly mix them in the stirring unit 1; feed the mixture to the thermal reaction unit 3 via the feeding unit 2, and heat it to 200∼220°C and hold for 8∼10min under the stirring of the spiral conveyance unit II so that the rubber powder is heated evenly and fully desulfurized and plasticized at high temperature and under the action of the activator and the softener, afterwards, deliver the resultant mixture to the cooling unit 4 for cooling to 80°C and below, and then send out from the cooling unit 4 for the production of reclaimed rubber products.

### Embodiment 3:

Add activator and softener in waste rubber powder in 20∼30 meshes, wherein the activator and the softener are the same with those in Embodiment 1, at a weight ratio of: rubber powder : activator : softener = 1: 0.3∼0.4%:12∼14%, and then evenly mix them in the stirring unit 1; feed the mixture to the thermal reaction unit 3 via the feeding unit 2, and heat it to 240∼260°C and hold for 10∼12min under the stirring of the spiral conveyance unit II so that the rubber powder is heated evenly and fully desulfurized and plasticized at high temperature and under the action of the activator and the softener, afterwards, deliver the resultant mixture to the cooling unit 4 for cooling to 80°C and below, and then send out from the cooling unit 4 for the production of reclaimed rubber products.

### Embodiment 4

Add activator and softener in waste rubber powder in 20-40 meshes, wherein the activator and the softener are the same as those in Embodiment 1, at a weight ratio of: rubber powder : activator : softener = 1: 0.3∼0.4%:14∼16%, and then evenly mix them in the stirring unit 1; feed the mixture to the thermal reaction unit 3 via the feeding unit 2, and heat it to 200∼220°C and hold for 10∼12min under the stirring of the spiral conveyance unit II so that the rubber powder is heated evenly and fully desulfurized and plasticized at high temperature and under the action of the activator and the softener, afterwards, deliver the resultant mixture to the cooling unit 4 for cooling to 80°C and below, and then send out from the cooling unit 4 for the production of reclaimed rubber products.

The test results of the physical properties of the plasticized rubber powder obtained according to the process of the invention are as follows:

**Physical properties of the plasticized rubber powder Table 1**

| Items | Test Results | National Standard GB/T 19208-2008 |
|---|---|---|
| Heating loss/% = | 0.6 | 1.0 |
| Ashcontent/% = | 8 | 8 |
| Acetone extract/% = | 6 | 8 |
| Rubber hydrocarbon content /% = | 4 | 42 |
| Carbon black content /% = | 31 | 26 |
| Metal content/% = | 0.02 | 0.03 |
| Fiber content/% = | 0.06 | 0.1 |
| Tensile strength /mpa = | 19 | 15 |
| Elongation at break /% = | 538 | 500 |

The test results of the physical properties of the reclaimed rubber produced according to the process of the invention are as follows:

**Physical properties of the reclaimed rubber Table 2**

| Items | Test Results | National Standard GB/T 13460-2008 |
|---|---|---|
| Heating loss /% = | 0.5 | 1.0 |
| Ash content /% = | 7 | 10 |
| Acetone extract /% = | 7 | 22 |
| Density / mg max = | 1.18 | 1.24 |
| Mooney viscosity max = | 74 | 80 |
| Tensile strength /mpa = | 12.3 | 9 |
| Elongation at break /% = | 420 | 360 |

It can be concluded from the data above that both the plasticized rubber powder and the reclaimed rubber manufactured according to the process of the invention meet the national standards.

The description also addresses an automatic plasticization apparatus for the plasticizing process, comprising a stirring unit 1, a feeding unit 2, a thermal reaction unit 3 and a cooling unit 4. The thermal reaction unit 3 is provided with a heating piece 5, and the cooling unit 4 is equipped with a cooling circulation piece 6. The outlet of the stirring unit 1 is communicated with the inlet of the feeding unit 2. The outlet of the feeding unit 2 is communicated with the inlet of the thermal reaction unit 3, and the outlet of the thermal reaction unit 3 is communicated with the inlet of the cooling unit 4.

The feeding unit 2 can adopt many structural forms, wherein the spiral conveyance unit I is used in this embodiment.

The thermal reaction unit 3 can adopt many structural forms, wherein the spiral conveyance unit II is used in this embodiment, and a heating piece 5 is configured outside the spiral conveyance unit II. The heating unit 5 can adopt many structural forms, such as an electrical heating unit or a heat-transfer oil heating circulation unit. In this embodiment, the heating piece 5 is designed to be a heat-transfer oil heating circulation unit since heat transfer oil heating is even.

The cooling unit 4 can adopt many structural forms. In this embodiment, it is designed to be the spiral conveyance unit III, and a cooling circulation piece 6 is designed outside it.

The cooling circulation piece 6 can be air cooled or water-cooled, etc. In order to save energy and/or fully use the excess heat, the cooling circulation piece in this embodiment is designed to be a circulated water-cooling piece.

To realize automatic control and continuous production, there is an electric control unit in this embodiment. The stirring unit 1, the feeding unit 2, the thermal reaction unit 3 and the cooling unit 4 are electrically coupled to the electric control unit so as to realize automatic control and continuous production.

By means of the principle of rubber desulfurization, the invention improves the existing dynamic vulcanization process and carries out the desulfurization and plasticizing of the rubber powder without pressure or water, thus greatly saving energy and having no waste gas emission. The process is also simple, labor & effort-saving, low in cost, stable in quality and easy to control. With continuous production, the process also features high efficiency. The plasticized rubber powder can be directly used for production of rubber products without dehydration, thereby saving a lot of energy, labor, materials and financial resources and simplifying the procedure.

Therefore, the invented process is characterized by simple procedure, automatic and continuous production, environmental friendliness without pressure, waste gas emission or pollutant discharge, safety and reliability, stable quality, good controllability, direct availability of the plasticized rubber powder in rubber products production without dehydration, energy saving, consumption reduction, low investment and low costs. Furthermore, the invention also provides an apparatus, for satisfying this plasticizing, featuring realization of continuous production, simple structure, convenient operation, good controllability and low costs.

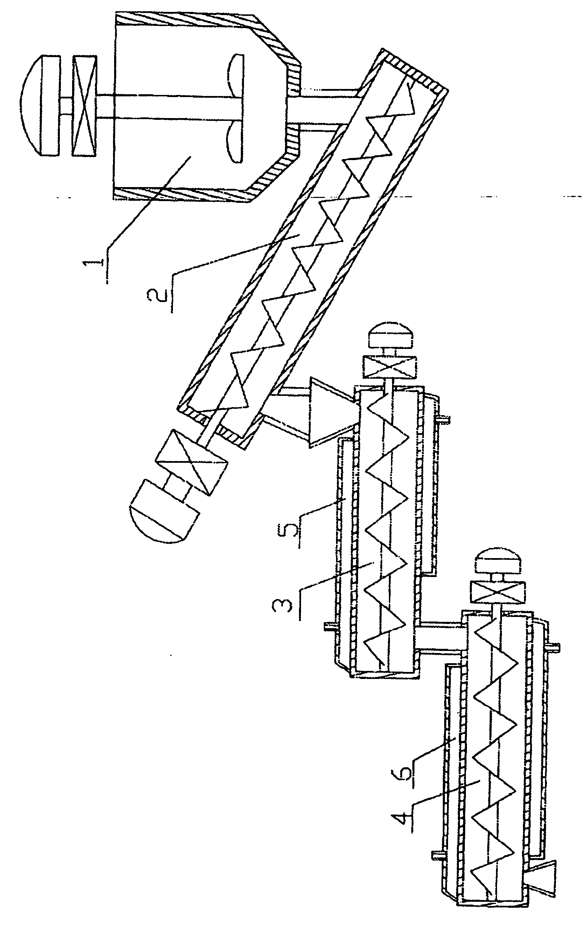

## Claims

1. An automatic rubber powder plasticizing process, wherein the detailed process is as follows:
Step 1, ingredients mixing: smash the waste rubber to powder in 10 mesh to 40 mesh, add activator and softener according to the weight ratio of: rubber powder: activator: softener =100%:0.3∼0.4%:8∼18%, then evenly mix them;
Step 2, desulfurization and plasticizing: heat the mixture obtained according to Step 1 to 180∼320°C and hold for 8 to 15 min to carry out desulfurization and plasticizing to get the plasticized rubber powder;
Step 3, cooling: cool the plasticized rubber powder after plasticizing to 80°C and below, then the resultant product is directly used or packaged for use;
wherein said activator is 450B or 510;
wherein said softener is pix carbonis or pine tar;
wherein the process is performed by an automatic plasticization apparatus which comprises a stirring unit (1), a feeding unit (2), a thermal reaction unit (3) and a cooling unit (4), wherein the thermal reaction unit (3) is provided with a heating piece (5), the cooling unit (4) is equipped with a cooling circulation piece (6), the outlet of the stirring unit (1) is communicated with the inlet of the feeding unit (2), the outlet of the feeding unit (2) is communicated with the inlet of the thermal reaction unit (3), and the outlet of the thermal reaction unit (3) is communicated with the inlet of the cooling unit (4);
wherein said feeding unit (2) is designed to be a spiral conveyance unit I;
wherein said thermal reaction unit (3) is designed to be a spiral conveyance unit II, and a heating piece (5) is configured outside the spiral conveyance unit II, the heating piece (5) of the thermal reaction unit (3) is designed to be a heat-transfer oil heating circulation unit;
wherein said cooling unit (4) is designed to be a spiral conveyance unit III, and a cooling circulation unit (6) is configured outside the spiral conveyance unit III;
wherein the cooling circulation piece (4) of said cooling unit (6) is designed to be a water-cooling circulation piece;
wherein an electric control unit is further provided for the said automatic rubber powder plasticizing process apparatus; and
wherein the stirring unit (1), the feeding unit (2), the thermal reaction unit (3) and the cooling unit (4) are electrically coupled to the electric control unit.

## Patentansprüche

1. Automatisches Verfahren zum Plastifizieren von Kautschukpulver, wobei das Verfahren im Einzelnen wie folgt abläuft:
Schritt 1, Mischen der Bestandteile: Zerkleinern des Abfallkautschuks zu einem Pulver von 10 bis 40 Mesh, Hinzufügen von Aktivator und Weichmacher entsprechend dem Gewichtsverhältnis von: Kautschukpulver; Aktivator: Weichmacher = 100%: 0.3 bis 0.4%: 8 bis 18%, dann gleichmäßiges Mischen davon;
Schritt 2, Entschwefeln und Plastifizieren: Erhitzen der gemäß Schritt 1 erhaltenen Mischung auf 180 bis 320° C und Halten während 8 bis 15 Minuten, um eine Entschwefelung und Plastifizierung auszuführen, so dass das plastifizierte Kautschukpulver erhalten wird;
Schritt 3, Abkühlen: Kühlen des plastifizierten Kautschukpulvers nach dem Plastifizieren auf 80° C oder darunter, wonach das resultierende Produkt unmittelbar verwendet oder zur Verwendung verpackt wird;
wobei der genannte Aktivator 450B oder 510 ist;
wobei der genannte Weichmacher pix carbonis oder Kiefernholzteer ist;
wobei das Verfahren von einer automatischen Plastifizierungsvorrichtung ausgeführt wird, die eine Mischeinheit (1), eine Zuführeinheit (2), eine thermische Reaktionseinheit (3) und eine Kühleinheit (4) umfasst, wobei die thermische Reaktionseinheit (3) mit einem Beheizungsteil (5) versehen ist, die Kühleinheit (4) mit einem Kühl-Zirkulationsteil (6) versehen ist, der Ausgang der Mischeinheit (1) mit dem Einlass der Zuführeinheit (2) in Verbindung steht, der Auslass der Zuführeinheit (2) mit dem Einlass der thermischen Reaktionseinheit (3) in Verbindung steht und der Auslass der thermischen Reaktionseinheit (3) mit dem Einlass der Kühleinheit (4) in Verbindung steht;
wobei die genannte Zuführeinheit (2) als eine Förderschneckeneinheit I ausgebildet ist;
wobei die thermische Reaktionseinheit (3) als eine Förderschneckeneinheit II ausgebildet ist, und ein Beheizungsteil (5) außerhalb der Förderschneckeneinheit II angeordnet ist, wobei das Beheizungsteil (5) der thermischen Reaktionseinheit (3) als eine mit Wärmeübertragungsöl arbeitende Wärmezirkulationseinheit ausgelegt ist;
wobei die Kühleinheit (4) als eine Förderschneckeneinheit III ausgebildet ist, und eine Kühlzirkulationseinheit (6) außerhalb der Förderschneckeneinheit III angeordnet ist;
wobei das Kühlzirkulationsteil (6) der Kühleinheit (4) als ein Wasserkühlungs-Zirkulationsteil ausgebildet ist;
wobei eine elektrische Steuereinheit für die Vorrichtung des automatischen Verfahrens zum Plastifizieren von Kautschukpulver vorgesehen ist; und
wobei die Mischeinheit (1), die Zuführeinheit (2), die thermische Reaktionseinheit (3) und die Kühleinheit (4) elektrisch mit der elektrischen Steuereinheit gekoppelt sind.

## Revendications

1. Procédé automatique de plastification d'une poudre de caoutchouc, le procédé détaillé étant comme suit :
Étape 1, mélange des ingrédients: réduction des déchets de caoutchouc en une poudre de 10 mesh à 40 mesh, addition d'un activateur et d'un plastifiant dans le rapport en poids poudre de caoutchouc : activateur : plastifiant = 100 % : 0,3-0,4 % : 8-18 % et production d'un mélange uniforme de ceux-ci ;
Étape 2, désulfuration et plastification : chauffage du mélange obtenu à l'Étape 1 à 180-320 °C, maintien à cette température pendant 8 à 15 minutes pour produire une désulfuration et plastification pour obtenir la poudre de caoutchouc plastifié ;
Étape 3, refroidissement : après plastification, refroidissement de la poudre de caoutchouc plastifié à 80 °C ou moins suivi directement par une utilisation ou un emballage pour utilisation du produit obtenu ;
dans lequel ledit activateur est le 450B ou le 510 ;
dans lequel ledit plastifiant est un goudron de houille ou un goudron de pin ;
dans lequel le procédé est effectué par un appareillage de plastification automatique qui comprend une unité de malaxage (1), une unité d'alimentation (2), une unité de réaction thermique (3) et une unité de refroidissement (4),
dans lequel l'unité de réaction thermique (3) est équipée d'un système de chauffage (5), l'unité de refroidissement (4) est équipée d'un système de circulation de refroidissement (6), la sortie de l'unité de malaxage (1) est en communication avec l'entrée de l'unité d'alimentation (2), la sortie de l'unité d'alimentation (2) est en communication avec l'entrée de l'unité de réaction thermique (3) et la sortie de l'unité de réaction thermique (3) est en communication avec l'entrée de l'unité de refroidissement (4);
dans lequel ladite unité d'alimentation (2) est conçue pour être une unité transporteuse en spirale I ;
dans lequel ladite unité de réaction thermique (3) est conçue pour être une unité transporteuse en spirale II, un système de chauffage (5) est configuré en dehors de l'unité transporteuse en spirale II et le système de chauffage (5) de l'unité de réaction thermique (3) est conçu pour être un système de circulation de chaleur à huile caloporteuse ;
dans lequel ladite unité de refroidissement (4) est conçue pour être une unité transporteuse en spirale III et dans lequel un système de circulation de refroidissement (6) est configuré en dehors de l'unité transporteuse en spirale III ;
dans lequel le système de circulation de refroidissement (4) de ladite unité de refroidissement (6) est conçu pour être un système de circulation de refroidissement par eau ;
dans lequel une unité de contrôle électrique est également fournie pour ledit appareillage de plastification automatique d'une poudre de caoutchouc ; et
dans lequel l'unité de malaxage (1), l'unité d'alimentation (2), l'unité de réaction thermique (3) et l'unité de refroidissement (4) sont électriquement couplées à l'unité de contrôle électrique.
